# EUROPÄISCHE PATENTSCHRIFT

(11) **EP 4 276 049 B1**
(45) Veröffentlichungstag und Bekanntmachung des Hinweises auf die Patenterteilung: **29.01.2025**
(21) Anmeldenummer: 23171519.4
(22) Anmeldetag: 04.05.2023
(51) Int. Cl.: B66D 5/28, B60T 13/68

(54) **BREMSSYSTEM FÜR DEN EINSATZ IN FÖRDERMASCHINEN FÜR SCHACHT- UND SCHRÄGFÖRDERANLAGEN**
BRAKING SYSTEM FOR USE IN A HANDLING MACHINE FOR SHAFT AND INCLINED CONVEYOR SYSTEMS
SYSTÈME DE FREINAGE POUR UTILISATION DANS DES MACHINES DE TRANSPORT POUR DES INSTALLATIONS DE FORAGE À PUITS ET À CONVOYEUR INCLINÉ

(30) Priorität: 10.05.2022 LU 102951
(43) Veröffentlichungstag der Anmeldung: 15.11.2023
(73) Patentinhaber: Siemag Tecberg GmbH, 35708 Haiger (DE)
(72) Erfinder: STÄRKLOW, Sergei, 35708 Haiger / Kalteiche (DE); AUGUST, Sergej, 35708 Haiger / Kalteiche (DE)
(74) Vertreter: Tegethoff, Sebastian

(56) Entgegenhaltungen:
- WO-A1-2020/016289
- CN-A- 108 298 452
- CN-U- 214 734 070
- DE-A1- 102019 133 011
- US-A1- 2015 123 458

## Beschreibung

Die vorliegende Erfindung bezieht sich auf ein Bremssystem für den Einsatz in Fördermaschinen für Schacht- und Schrägförderanlagen, wie durch den Oberbegriff der unabhängigen Patentansprüche beschrieben.

In modernen Schachtförderanlagen, mit denen Teufen von teilweise über tausend Metern erreicht werden, spielt die korrekte und in jeder Situation verlässliche Funktion der Bremsen der Fördermaschine eine maßgebende und zentrale Rolle.

Mit der stetig wachsenden Komplexität elektronischer Komponenten in Bremssystemen, steigt auch die Möglichkeit von Fehlfunktionen. Ist eine sicherheitsrelevante Komponente von einer solchen Fehlfunktion betroffen, können im schlimmsten Fall Menschen zu Schaden kommen. Würde z. B. eine Komponente eines elektrohydraulischen oder elektropneumatischen Bremssystems im Förderbetrieb der Schachtförderanlage unerwartet eine Vollbremsung auslösen, könnte dies zu Verletzungen bis hin zum Tod von Menschen, Tieren oder zu Umweltschäden sowie auch zu erheblichen Schäden am Material oder der Ausrüstung führen.

Um das Risiko von Gefahr bringenden Fehlfunktionen von sicherheitsrelevanten elektrischen, elektronischen oder programmierbar elektronischen (E/E/PE) Systemen zu minimieren, sollten diese unter Berücksichtigung einschlägiger Normen entwickelt werden.

Funktionale Sicherheit bezeichnet den Teil der Sicherheit eines Systems, wie z.B. des Bremssystems einer Schacht- oder Schrägförderanlage, der von der korrekten Funktion des sicherheitsbezogenen Systems und anderer risikomindernder Maßnahmen abhängt. Es steht also die Funktion im Fokus, daher der Begriff "funktionale Sicherheit". Dabei ist nachzuweisen, dass die E/E/PE - Systeme, hier die Bremsensteuerung, trotz steigender Komplexität sicher und zuverlässig die geforderte Funktionalität liefern.

Bedingt durch die weltweit immer wichtiger werdenden Anforderungen an die funktionale Sicherheit bei Maschinen und Anlagen, insbesondere auch bei Schacht- und Schrägförderanlagen, ist es erforderlich, technische Lösungen vorzuhalten, die Lücken bei der durch die Hersteller der Einzelkomponenten durchgeführten Standardbewertungen für die vorhandene funktionale Sicherheit erfüllen und eine zuverlässige Bewertung der Ausfallwahrscheinlichkeiten zulassen und so gefährliche Bremsvorgänge vermeiden.

Bekannte Typen von Ventilen in Bremssystemen sind mechanisch fest einstellbare Druckbegrenzungsventile oder Proportionalventile für Druckregelung.

Diese Ventile haben unterschiedliche Nachteile. So können mechanische Druckbegrenzungsventile während des Betriebs nicht bedarfsgerecht verstellt werden. Die Bestimmung einer Ausfallwahrscheinlichkeit durch Hersteller von Proportionalventilen beschränkt sich auf die Bewertung der Extremstellungen, entweder komplett auf oder zu. Somit ist eine zuverlässige Festlegung von Ausfallwahrscheinlichkeiten für die aktive Druckregelung durch die Hersteller nicht verfügbar.

Die Bewertungen von marktüblichen Komponenten, insbesondere von proportional einstellbaren Ventilen, d.h. von kontinuierlich verstellbaren Ventilen, die den Ausgangsdruck in Abhängigkeit von elektrischen Strom begrenzen, basiert in der Regel nur auf den jeweiligen Endwerten, d.h. dem Minimalwert bzw. Maximalwert, die den Zustand nach Abschalten der Spannungsversorgung darstellen, nicht jedoch den dazwischenliegenden Regelbereich, der aber für eine gesteuerte Abbremsung einer Förderanlage im Falle z. B. eines Stromausfalls von großer Bedeutung ist.

Ein weiterer Nachteil bisher bekannter Systeme mit fest einstellbaren Druckventilen liegt in der Notwendigkeit, für jedes einzustellende Druckniveau mehrere Ventile mit unterschiedlich voreingestellten Druckwerten einzusetzen, welche durch eine Steuerung immer auf den benötigten Wert vorgewählt werden.

Bekannt sind Druckbegrenzungsbaugruppen für den Einsatz in Bremssystemen, die in Schacht- und Schrägförderanlagen, Abteufanlagen oder Not- bzw. Hilfsfahranlagen zum Einsatz kommen, die den Systemdruck im Bremssystem im Fehlerfall oder bei Anforderung auch im Falle eines Stromausfalles, auf ein voreingestelltes Druckniveau, d.h. den Bremsdruck, schnell abbauen und anschließend diesen auf dem erreichten Niveau für eine vorgegebene Dauer, d.h. die Bremszeit, halten können, um z.B. eine katastrophale Vollbremsung oder aber auch ein Abstürzen des Fördermittels zu verhindern.

Derartige Bremssysteme mit konstanter Bremskraft weisen bereits funktionale Sicherheit auf. Sie sind aber nicht flexibel an allen Fördermaschinen, unabhängig von Last und Fördermaschinenart, einsetzbar, bedürfen oft eines erhöhten Aufwandes und sind dadurch kostenintensiver, bzw. technisch schwer realisierbar.

Es besteht daher ein Bedarf an der Schaffung einer im Sinne der funktionalen Sicherheit bewertbaren aktiven Regelung der Bremsverzögerung bei Fördermaschinen im Sicherheitsbremsfall, zur Realisierung eines Bremssystems für den Einsatz in Fördermaschinen im Bergbau mit konstanter Verzögerung, welches unabhängig von Fördermaschinenart und Last realisiert werden kann.

Diese Aufgabe wird durch die Merkmale des unabhängigen Patentanspruches 1 gelöst, wobei zweckmäßige Ausführungsformen durch die Merkmale der Unteransprüche beschrieben sind.

Vorgesehen ist dabei ein Bremssystem für den Einsatz in Schacht- und Schrägförderanlagen im Bergbau, mit mehreren Bremskanälen zum Lüften oder Auflegen von Bremskrafterzeugen auf die vorgesehenen Bremsflächen bzw. zum Einstellen der jeweiligen Bremskraft zur Bereitstellung der erforderlichen Bremsverzögerung, wobei pro Bremskanal ein erster Hauptdruckregelpfad und ein zweiter, im Fehlerfall des Hauptdruckregelpfades sich selbst aktivierender Nebendruckregelpfad, jeweils mit den entsprechenden Ventilanordnungen, als Backup für denselben Bremskanal vorgesehen ist, und wobei eine Mehrzahl von sicheren Central Processing Units (CPUs) mit zugeordneter Signal- und Spannungsversorgung zur Regelung der Ventilanordnungen der Haupt- und Nebendruckregelpfade der mehreren Bremskanäle vorgesehen sind.

Das Bremssystem nach Maßgabe der vorliegenden Erfindung wird vorzugsweise vierkanalig ausgeführt. Es kann ebenso gut aber auch dreikanalig oder mit mehr als vier Bremskanälen ausgeführt werden, ohne den Bereich der Erfindung zu verlassen.

Im Sinne dieser Patentanmeldung beinhaltet der Begriff Förderanlage neben Fördermaschinen auch Häspel und Winden.

Durch das Vorsehen mehrerer Druckregelpfade pro Bremsregelkanal wird die Ausfallwahrscheinlichkeit der jeweiligen Kanäle minimiert, da in jedem Fall ein Druckregelpfad als Backup bzw. Standby vorhanden ist, durch die redundante Regelung eines Bremskanales mit zwei CPUs.

Vorzugsweise ist das Bremssystem dabei so ausgelegt, dass jede, vorzugweise sichere, CPU zur Regelung des Hauptdruckregelpfades zumindest eines ihr zugeordneten Bremskanals sowie eines Nebendruckregelpfades zumindest eines anderen der mehreren Bremskanäle, also im Wesentlichen kreuzweise, vorgesehen ist.

Im Fehlerfall an dem Hauptdruckregelpfad eines Bremskanals schaltet die diesem zugeordnete CPU nicht nur diesen Hauptdruckregelpfad, sondern gleichzeitig auch den jeweiligen ihr ebenfalls zugeordneten Nebendruckregelpfad des anderen Bremsregelkanals ab. Der Nebendruckregelpfad des der CPU zugeordneten einen Bremsregelkanals sowie der Hauptdruckregelpfad des der CPU zugeordneten anderen Bremsregelkanals, werden dabei auch weiterhin durch andere, vorzugsweise sichere, CPUs versorgt. Somit bleiben auch im Fehlerfall an einem Haupt- oder Nebendruckregelkanal alle Bremskanäle voll verfügbar.

Erzielt wird mit den genannten Maßnahmen ein mehrkanaliges, fehlertolerantes Bremssystem mit geregelter Verzögerung und Erfüllung der Anforderungen an die funktionale Sicherheit.

Das Bremssystem kann hydraulisch oder pneumatisch ausgeführt sein und kann in einem Bremssystem für Friktionsfördermaschinen, aber auch in einem Bremssystem für Trommelfördermaschinen erfolgen.

Vorgesehen ist schließlich auch ein Verfahren zur Steuerung eines Bremssystems für den Einsatz in Schacht- oder Schrägförderanlagen im Bergbau mit mehreren Bremskanälen zum Lüften oder Anlegen von Bremskrafterzeugern auf vorgesehenen Bremsflächen bzw. zum Einstellen der jeweiligen Bremskraft zur Bereitstellung der erforderlichen Bremsverzögerung, welches sich auszeichnet durch die Schritte des Vorsehens eines ersten Hauptdruckregelpfades und eines zweiten Nebendruckregelpfades pro Bremskanal, das Vorsehen einer Mehrzahl von vorzugsweise sicheren Central Processing Units (CPUs) mit zugeordneter Signal- und Spannungsversorgung, die Regelung der Ventilanordnungen des Hauptdruckregelpfades zumindest eines Bremskanals sowie eines Nebendruckregelpfades zumindest eines anderen der mehreren Bremskanäle, durch eine jeweilige, vorzugsweise sichere, CPU, das Abschalten des ersten, aktiven Hauptdruckregelpfades eines Bremsregelkanals und des zweiten, passiven Nebendruckregelpfades eines anderen Bremsregelkanals, durch die diesen Druckregelpfaden zugeordnete, vorzugsweise sichere, CPU im Fehlerfall, sowie den Weiterbetrieb des einen und des anderen Bremskanals durch den zweiten Nebendruckregelpfad des einen Bremskanals sowie den ersten Hauptdruckregelpfad des anderen Bremskanals durch eine andere, diesen Druckregelpfaden zugeordnete, vorzugsweise sichere, CPU.

Es wird damit eine im Sinne der funktionalen Sicherheit bewertbare, aktive Regelung der Bremsverzögerung bei Fördermaschinen im Sicherheitsbremsfall, zur Realisierung eines Bremssystems für den Einsatz in Fördermaschinen im Bergbau mit konstanter Verzögerung, welches unabhängig von Fördermaschinenart und Last realisiert werden kann, geschaffen.

Bei dem Bremssystem nach Maßgabe der vorliegenden Erfindung fallen die Bremselemente eines Bremskanals erst aus, d.h. die Bremsbeläge legen unkontrolliert auf Bremsflächen auf oder bleiben offen, obwohl sie aufliegen sollten, wenn zwei, vorzugsweise sichere, CPUs versagen. Dies stellt einen erheblichen Zuwachs an Systemsicherheit dar.

Weitere Eigenschaften und Merkmale der Erfindung ergeben sich aus der folgenden, nicht beschränkenden, Beschreibung eines Teilsteuerschemas einer Steuerung einer Bremse gemäß der Erfindung.

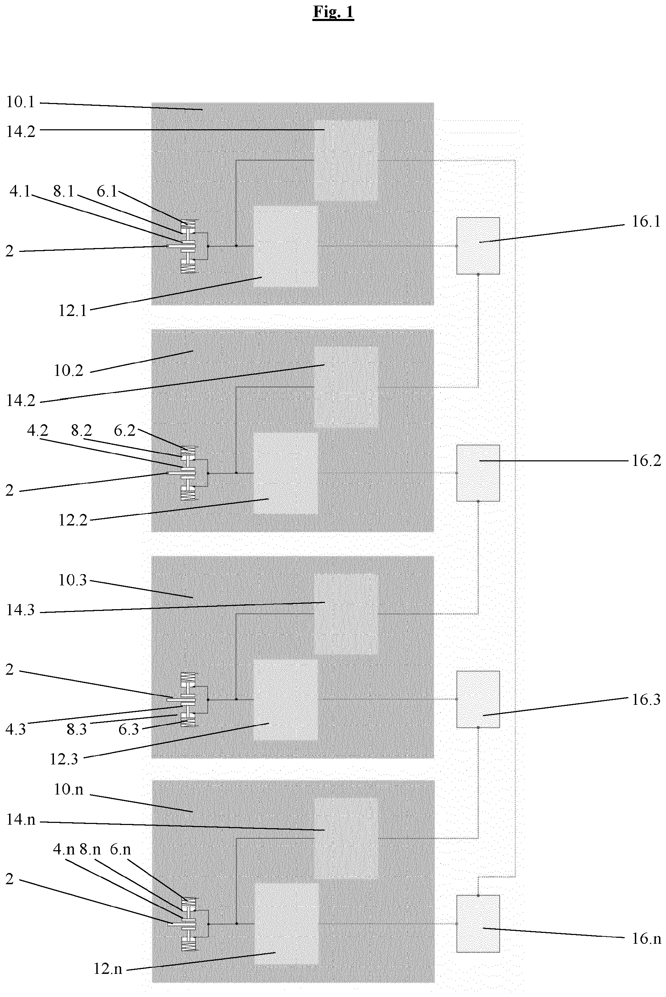

Die Fig. 1 zeigt dabei in schematischer Weise das Funktionsbild einer mehrkanaligen hydraulischen Bremse für den Einsatz in Schacht- und Schrägförderanlagen im Bergbau mit Bremsflächen 2 und Bremsbelägen 4.1, 4.2, 4.3 und 4.n, die im Normalzustand durch Federn 6.1, 6.2, 6.3 und 6.n wie dargestellt gegen die Bremsscheibe 2 gedrückt werden. Um die Bremse zu lösen, werden die Zylinder 8.1, 8.2, 8.3 und 8.n hydraulisch mit Druck über die Bremskanäle 10.1, 10.2, 10.3 und 10.n beaufschlagt, so dass die Bremsbeläge 4.1, 4.2, 4.3 und 4.n gelüftet werden und die Bremse damit gelöst wird.

Wie der Fig. 1 ebenfalls zu entnehmen ist, weist jeder Bremskanal 10.1, 10.2, 10.3 und 10.n einen ersten Hauptdruckregelpfad 12.1, 12.2, 12.3 und 12.n für den Regelbetrieb und einen zweiten Nebendruckregelpfad 14.1, 14.2, 14.3 und 14.n als Hot-Standby, jeweils mit den entsprechenden Ventilanordnungen (nicht dargestellt), der sich im Fehlerfall des Hauptdruckregelpfades eigenständig aktiviert. Die pro Bremskanal vorgesehenen Ventile (nicht dargestellt) umfassen dabei Proportionalventile.

Jeder der Bremskanäle 10.1, 10.2, 10.3 und 10.n ist, wie auch aus Fig. 1 ersichtlich, mit einer, vorzugsweise sicheren, Central Processing Unit (CPU) 16.1, 16.2, 16.3 und 16.n mit zugeordneter Signal- und Spannungsversorgung zur Regelung der Ventilanordnungen, bzw. der Proportionalventile, (nicht dargestellt) des Hauptdruckregelpfades versehen. Die, vorzugsweise sicheren, Central Processing Units (CPUs) 16.1, 16.2, 16.3 und 16.n regeln neben den jeweiligen Ventilanordnungen, bzw. Proportionalventilen, (nicht dargestellt) des Hauptdruckregelpfad 12.1, 12.2, 12.3 und 12.n eines ersten Bremskanals 10.1, 10.2, 10.3 und 10.n, aber auch die Ventilanordnungen, bzw. die Proportionalventile, (nicht dargestellt) des Nebendruckregelpfades 14.1, 14.2, 14.3 und 14.n eines anderen der Bremskanäle 10.1, 10.2, 10.3 und 10.n.

Im Fehlerfall schaltet die jeweilige, vorzugsweise sichere, Central Processing Unit (CPU) 16.1, 16.2, 16.3 und 16.n neben dem Hauptdruckregelpfad 12.1, 12.2, 12.3 und 12.n des ihr zugeordneten, ersten Bremskanals 10.1, 10.2, 10.3 und 10.n auch den ebenfalls derselben, vorzugsweise sicheren, Central Processing Unit (CPU) zugeordneten Nebendruckregelpfad 14.1, 14.2, 14.3 und 14.n des zweiten, anderen Bremskanals 10.1, 10.2, 10.3 und 10.n ab, wobei die ersten und zweiten Bremskanäle 10.1, 10.2, 10.3 und 10.n durch die Nebendruckregelpfade 14.1, 14.2, 14.3 und 14.n der ersten sowie die Hauptdruckregelpfade 12.1, 12.2, 12.3 und 12.n der zweiten, anderen Bremskanäle 10.1, 10.2, 10.3 und 10.n weiterbetrieben werden, so dass eine fehlertolerante geregelte Verzögerung unter Erfüllung der Anforderungen an die funktionale Sicherheit möglich wird.

Im Betrieb wird das System durch ein Pumpensystem (nicht dargestellt) mit Druck versorgt und zu einem Tank (nicht dargestellt) hin entlastet. Eine Rückschlagventileinheit (nicht dargestellt) verhindert dabei den Druckabbau Richtung Pumpensystem. Fällt die Druckversorgung aus, bremst das System automatisch ab.

## Patentansprüche

1. Bremssystem für den Einsatz in Schacht- und Schrägförderanlagen im Bergbau, mit mehreren Bremskanälen (10.1, 10.2, 10.3, 10.n) zum Lüften oder Anlegen von Bremskrafterzeugern (4.1, 4.2, 4.3, 4.n) auf vorgesehene Bremsflächen (2), wobei pro Bremskanal (10.1, 10.2, 10.3, 10.n) ein erster Hauptdruckregelpfad (12.1, 12.2, 12.3, 12.n) und ein zweiter, im Fehlerfall des Hauptdruckregelpfades (12.1, 12.2, 12.3, 12.n) sich aktivierender, Nebendruckregelpfad (14.1, 14.2, 14.3, 14.n) vorgesehen ist, und wobei eine Mehrzahl von, vorzugsweise sicheren, Central Processing Units (CPUs) (16.1, 16.2, 16.3, 16.n) mit zugeordneter Signal- und Spannungsversorgung zur redundanten Regelung der Haupt- (12.1, 12.2, 12.3, 12.n) und Nebendruckregelpfade (14.1, 14.2, 14.3, 14.n) der mehreren Bremskanäle (10.1, 10.2, 10.3, 10.n) vorgesehen sind, **dadurch gekennzeichnet, dass** jede, vorzugsweise sichere, CPU (16.1, 16.2, 16.3, 16.n) zur Regelung des Hauptdruckregelpfades (12.1, 12.2, 12.3, 12.n) zumindest eines ihr zugeordneten Bremskanals (10.1, 10.2, 10.3, 10.n) sowie eines Nebendruckregelpfades (14.1, 14.2, 14.3, 14.n) zumindest eines anderen der mehreren Bremskanäle (10.1, 10.2, 10.3, 10.n) vorgesehen ist.

2. Bremssystem nach Anspruch 1, **dadurch gekennzeichnet, dass** pro Bremskanal (10.1, 10.2, 10.3, 10.n) eine, vorzugsweise sichere, CPU (16.1, 16.2, 16.3, 16.n) vorgesehen ist, welche den Hauptdruckregelpfad (12.1, 12.2, 12.3, 12.n) des ihr zugeordneten Bremskanals (10.1, 10.2, 10.3, 10.n) sowie den Nebendruckregelpfad (14.1, 14.2, 14.3, 14.n) eines anderen der mehreren Bremskanäle (10.1, 10.2, 10.3, 10.n) regelt.

3. Verfahren zur Steuerung eines Bremssystems für den Einsatz in Schacht- und Schrägförderanlagen im Bergbau, mit mehreren Bremskanälen (10.1, 10.2, 10.3, 10.n) zum Lüften oder Anlegen von Bremsbelägen (4.1, 4.2, 4.3, 4.n) auf vorgesehene Bremsflächen (2), **gekennzeichnet durch** die Schritte:
a. Vorsehen eines ersten Hauptdruckregelpfades (12.1, 12.2, 12.3, 12.n) und eines zweiten Nebendruckregelpfades (14.1, 14.2, 14.3, 14.n) pro Bremskanal (10.1, 10.2, 10.3, 10.n);
b. Vorsehen einer Mehrzahl von, vorzugsweise sicheren, Central Processing Units (CPUs) (16.1, 16.2, 16.3, 16.n) mit zugeordneter Signal- und Spannungsversorgung;
c. Regelung der Ventilanordnungen des Hauptdruckregelpfades (12.1, 12.2, 12.3, 12.n) zumindest eines Bremskanals (10.1, 10.2, 10.3, 10.n) sowie eines Nebendruckregelpfades (14.1, 14.2, 14.3, 14.n) zumindest eines anderen der mehreren Bremskanäle (10.1, 10.2, 10.3, 10.n) durch eine jeweilige, vorzugsweise sichere, CPU (16.1, 16.2, 16.3, 16.n);
d. im Fehlerfall Abschalten des Hauptdruckregelpfades (12.1, 12.2, 12.3, 12.n) eines ersten Bremsregelkanals (10.1, 10.2, 10.3, 10.n) und des Nebendruckregelpfades (14.1, 14.2, 14.3, 14.n) eines zweiten Bremsregelkanals (10.1, 10.2, 10.3, 10.n) durch die diesen Druckregelpfaden zugeordnete, vorzugsweise sichere, CPU (16.1, 16.2, 16.3, 16.n); sowie
e. Weiterbetrieb des einen und des anderen Bremskanals (10.1, 10.2, 10.3, 10.n) durch den zweiten Nebendruckregelpfad (14.1, 14.2, 14.3, 14.n) des einen Bremskanals (10.1, 10.2, 10.3, 10.n) sowie den ersten Hauptdruckregelpfad (12.1, 12.2, 12.3, 12.n) des anderen Bremskanals (10.1, 10.2, 10.3, 10.n) durch die diesen Druckregelpfaden zugeordnete, vorzugsweise sichere, CPU (16.1, 16.2, 16.3, 16.n).

## Claims

1. Braking system for use in shaft and inclined conveyor systems in mining, having a plurality of braking channels (10.1, 10.2, 10.3, 10.n) for releasing or applying braking force generators (4.1, 4.2, 4.3, 4. n) to provided braking surfaces (2), wherein a first main pressure control path (12.1, 12.2, 12.3, 12.n) and a second secondary pressure control path (14.1, 14.2, 14.3, 14.n), which is activated in the event of a fault in the main pressure control path (12.1, 12.2, 12.3, 12.n), is provided and wherein a plurality of, preferably safe, central processing units (CPUs) (16.1, 16.2, 16.3, 16. n) with associated signal and voltage supply are provided for redundant control of the main (12.1, 12.2, 12.3, 12.n) and secondary pressure control paths (14.1, 14.2, 14.3, 14.n) of the multiple brake channels (10.1, 10.2, 10.3, 10.n), **characterised in that** each, preferably safe, CPU (16.1, 16.2, 16.3, 16.n) is used to control the main pressure control path (12.1, 12.2, 12.3, 12.n) of at least one brake channel (10. 1, 10.2, 10.3, 10.n) and a secondary pressure control path (14.1, 14.2, 14.3, 14.n) of at least one other of the multiple brake channels (10.1, 10.2, 10.3, 10.n).

2. Braking system according to claim 1, **characterised in that** one, preferably safe, CPU (16.1, 16.2, 16.3, 16.n) is provided for each brake channel (10.1, 10.2, 10.3, 10.n) which controls the main pressure control path (12.1, 12.2, 12.3, 12.n) of the brake channel (10.1, 10.2, 10.3, 10.n) assigned to it as well as the secondary pressure control path (14.1, 14.2, 14.3, 14.n) of another of the several brake channels (10.1, 10.2, 10.3, 10.n).

3. Method for controlling a braking system for use in shaft and inclined conveyor systems in mining, having a plurality of braking channels (10.1, 10.2, 10.3, 10.n) for releasing or applying brake linings (4.1, 4.2, 4.3, 4.n) to provided braking surfaces (2), **characterised by** the steps:
a. providing a first main pressure control path (12.1, 12.2, 12.3, 12.n) and a second secondary pressure control path (14.1, 14.2, 14.3, 14.n) per brake channel (10.1, 10.2, 10.3, 10.n);
b. providing a plurality of, preferably secure, central processing units (CPUs) (16.1, 16.2, 16.3, 16.n) with associated signal and power supply;
c. control of the valve arrangements of the main pressure control path (12.1, 12.2, 12.3, 12.n) of at least one brake channel (10.1, 10.2, 10.3, 10.n) and of a secondary pressure control path (14.1, 14.2, 14.3, 14.n) of at least one other of the several brake channels (10.1, 10.2, 10.3, 10.n) by a respective, preferably safe, CPU (16.1, 16.2, 16.3, 16.n);
d. in the event of a fault, switching off the main pressure control path (12.1, 12.2, 12.3, 12.n) of a first brake control channel (10.1, 10.2, 10.3, 10.n) and the secondary pressure control path (14.1, 14. 2, 14.3, 14.n) of a second brake control channel (10.1, 10.2, 10.3, 10.n) by the, preferably safe, CPU (16.1, 16.2, 16.3, 16.n) assigned to these pressure control paths; and
e. continued operation of one and the other brake channel (10.1, 10.2, 10.3, 10.n) by the second secondary pressure control path (14.1, 14.2, 14.3, 14.n) of the one brake channel (10.1, 10.2, 10.3, 10. n) and the first main pressure control path (12.1, 12.2, 12.3, 12.n) of the other brake channel. (10.1, 10.2, 10.3, 10.n) through the preferably safe CPU (16.1, 16.2, 16.3, 16.n) assigned to these pressure control paths.

## Revendications

1. Système de freinage destiné à une application dans des installations de transport dans des puits, et inclinées, de l'industrie minière, ayant plusieurs conduits de freinage (10.1, 10.2, 10.3, 10.n) pour la ventilation ou l'application d'un générateur de force de freinage (4.1, 4.2, 4.3, 4.n) sur des surfaces de freinage prévues à cet effet (2), selon lequel, par conduit de freinage (10.1, 10.2, 10.3, 10.n), un premier chemin de réglage de pression principale (12.1, 12.2, 12.3, 12.n) et un deuxième chemin de réglage de pression auxiliaire (14.1, 14.2, 14.3, 14.n) qui s'active de manière automatique en cas de panne du premier chemin de réglage de pression principale (12.1, 12.2, 12.3, 12.n), sont prévus, et selon lequel une pluralité de CPU (16.1, 16.2, 16.3, 16.n), de préférence sécurisés, avec alimentation électrique et signaux associés pour le réglage redondant des chemins de réglage de pression principale (12.1, 12.2, 12.3, 12.n) et auxiliaire (14.1, 14.2, 14.3, 14.n) des multiples conduits de freinage (10.1, 10.2, 10.3, 10.n), sont prévus, le système étant **caractérisé en ce que** chaque CPU (16.1, 16.2, 16.3, 16.n), de préférence sécurisé, est prévu pour la régulation du chemin de régulation de pression principale (12.1, 12.2, 12.3, 12.n) d'au moins un conduit de freinage (10.1, 10.2, 10.3, 10.n) qui lui est associé ainsi que d'un chemin de régulation de pression secondaire (14.1, 14.2, 14.3, 14.n) d'au moins un autre des plusieurs conduits de freinage (10.1, 10.2, 10.3, 10.n).

2. Système de freinage selon la revendication 1, **caractérisé en ce que**, pour chaque conduit de freinage (10.1, 10.2, 10.3, 10.n), il est prévu un CPU, de préférence sécurisé (16.1, 16.2, 16.3, 16.n), qui règle le chemin de réglage de pression principale (12.1, 12.2, 12.3, 12.n) du conduit de freinage qui lui est associé (10.1, 10.2, 10.3, 10.n), ainsi que le chemin de réglage de pression auxiliaire (14.1, 14.2, 14.3, 14.n) d'un autre des multiples conduits de freinage (10.1, 10.2, 10.3, 10.n).

3. Procédé de commande d'un système de freinage destiné à une application dans des installations de transport dans des puits, et inclinées, de l'industrie minière, ayant plusieurs conduits de freinage (10.1, 10.2, 10.3, 10.n) pour la ventilation ou l'application de garnitures de freinage (4.1, 4.2, 4.3, 4.n) sur des surfaces de freinage prévues à cet effet (2), **caractérisé par** les étapes :
a. de mise à disposition d'un premier chemin de réglage de pression principale (12.1, 12.2, 12.3, 12.n) et d'un deuxième chemin de réglage de pression auxiliaire (14.1, 14.2, 14.3, 14.n) par conduit de freinage (10.1, 10.2, 10.3, 10.n) ;
b. de mise à disposition d'une pluralité de CPU, de préférence sécurisés, (16.1, 16.2, 16.3, 16.n) ayant une alimentation électrique et signaux associés ;
c. de réglage de l'ordonnancement des soupapes du chemin de réglage de pression principale (12.1, 12.2, 12.3, 12.n) d'au moins l'un des conduits de freinage (10.1, 10.2, 10.3, 10.n), ainsi que du chemin de réglage de pression auxiliaire (14.1, 14.2, 14.3, 14.n) d'au moins un autre des multiples conduits de freinage (10.1, 10.2, 10.3, 10.n) via un CPU respectif, de préférence sécurisé (16.1, 16.2, 16.3, 16.n) ;
d. en cas de panne, de l'arrêt du chemin de réglage de pression principale (12.1, 12.2, 12.3, 12.n) d'un premier conduit de freinage (10.1, 10.2, 10.3, 10.n) et du chemin de réglage de pression auxiliaire (14.1, 14.2, 14.3, 14.n) d'un second conduit de réglage du freinage (10.1, 10.2, 10.3, 10.n) via les CPU, de préférence sécurisés (16.1, 16.2, 16.3, 16.n), qui sont associés aux chemins de réglage ; ainsi que
e. de poursuite du fonctionnement de l'un et de l'autre conduits de freinage (10.1, 10.2, 10.3, 10.n) via le deuxième chemin de réglage de pression auxiliaire (14.1, 14.2, 14.3, 14.n) de l'un des conduits de freinage (10.1, 10.2, 10.3, 10.n). n), ainsi que du premier chemin de réglage de pression principale (12.1, 12.2, 12.3, 12.n) de l'autre conduit de freinage (10.1, 10.2, 10.3, 10.n) via le CPU (16.1, 16.2, 16.3, 16.n), de préférence sécurisé, associé à ces chemins de réglage de pression.
